# EUROPÄISCHE PATENTSCHRIFT

(11) **EP 1 534 402 B1**
(45) Veröffentlichungstag und Bekanntmachung des Hinweises auf die Patenterteilung: **21.11.2007**
(21) Anmeldenummer: 03766188.1
(22) Anmeldetag: 16.07.2003
(51) Int. Cl.: B01D 19/04, D21H 21/12

(54) **ENTSCHÄUMER UND/ODER ENTLÜFTER FÜR WÄSSRIGE, ZUR SCHAUMBILDUNG NEIGENDE MEDIEN**
DEFOAMING AGENT AND/OR DEAERATOR FOR AQUEOUS MEDIA TENDING TO FOAM
AGENTS ANTIMOUSSANTS ET / OU DESAERANTS POUR MILIEUX AQUEUX TENDANT A FORMER DE LA MOUSSE

(30) Priorität: 24.07.2002 DE 10233701
(43) Veröffentlichungstag der Anmeldung: 01.06.2005
(73) Patentinhaber: BASF Aktiengesellschaft, 67056 Ludwigshafen (DE)
(72) Erfinder: BONN, Johann, 67258 Hessheim (DE); LORENZ, Klaus, 67549 Worms (DE); WEHRLE, Jörg, 64646 Heppenheim (DE); MATZ, Manfred, 67069 Ludwigshafen (DE)
(86) Internationale Anmeldenummer: PCT/EP2003/007703
(87) Internationale Veröffentlichungsnummer: WO 2004/012843

(56) Entgegenhaltungen:
- EP-A- 0 723 795
- US-A- 4 626 377
- US-B1- 6 251 958

## Beschreibung

Die Erfindung betrifft Entschäumer und/oder Entlüfter auf der Basis von Öl-in-Wasser-Dispersionen, deren Ölphase mindestens eine hydrophobe Verbindung und deren wässrige Phase mindestens einen Stabilisator, Wasser und gegebenenfalls ein Verdickungsmittel enthält, für wässrige, zur Schaumbildung neigende Medien und die Verwendung der Entschäumer und/oder Entlüfter zur Schaumbekämpfung von zur Schaumbildung neigenden wässrigen Medien, insbesondere zur Schaumbekämpfung bei der Zellstoffkochung, der Zellstoffwäsche, der Mahlung von Papierstoff, der Papierherstellung und der Dispergierung von Pigmenten für die Papierherstellung.

Aus der DE-A-30 01 387 sind wässrige emulgatorhaltige Öl-in-Wasser-Emulsionen bekannt, die höherschmelzende aliphatische Alkohole und bei Raumtemperatur flüssige Kohlenwasserstoffe enthalten. Die Ölphase der Öl-in-Wasser-Emulsionen kann gegebenenfalls noch weitere als Entschäumer wirkende Komponenten enthalten, z.B. höherschmelzende nichtaromatische Kohlenwasserstoffe, Fettsäuren oder deren Derivate, wie beispielsweise Fettsäureester, Bienenwachs, Karnaubawachs, Japanwachs und Montanwachs.

Aus der EP-A-0 531 713 sind Entschäumer auf der Basis von Öl-in-Wasser-Emulsionen bekannt, deren Ö1-Phase einen Alkohol mit mindestens 12 C-Atomen, Fettsäureester aus Alkoholen mit mindestens 22 C-Atomen und C₁- bis C₃₆-Carbonsäuren, oder Fettsäureester von C₁₂- bis C₂₂-Carbonsäuren mit 1- bis 3-wertigen C₁- bis C₁₈-Alkoholen oder einen Kohlenwasserstoff mit einem Siedepunkt oberhalb von 200°C bzw. Fettsäuren mit 12 bis 22 C-Atomen in Kombination mit Polyglycerinestern enthält, die durch eine mindestens 20 %ige Veresterung von Polyglycerinmischungen mit mindestens einer Fettsäure mit 12 bis 36 C-Atomen erhältlich sind. Auch diese Öl-in-Wasser-Emulsionen sind mit Hilfe eines wasserlöslichen Emulgators stabilisiert.

Aus der EP-A-0 662 172 sind Entschäumer auf der Basis von Ö1-in-Wasser-Emulsionen bekannt, die beispielsweise in Papierfabriken als Entschäumer eingesetzt werden und die auch bei höheren Temperaturen der Wasserkreisläufe noch ausreichend wirksam sind. Solche Entschäumer enthalten in der Ölphase
(a) Fettsäureester aus C₁₂- bis C₂₂-Carbonsäuren mit. 1- bis 3-wertigen C₁- bis C₂₂-Alkoholen,
(b) Polyglycerinester, die durch mindestens 20 %ige Veresterung von Polyglycerinen, die mindestens 2 Glycerineinheiten aufweisen, mit mindestens einer C₁₂- bis C₃₆-Fettsäure erhältlich sind und
(c) Fettsäureester aus C₁₂- bis C₂₂-Carbonsäuren und Polyalkylenglykolen, wobei die Molmasse der Polyalkylenglykole bis zu 5000 g/mol beträgt. Die hydrophobe Phase kann gegebenenfalls weitere Bestandteile wie Alkohole mit mindestens 12 C-Atomen oder Kohlenwasserstoffe mit einem Siedepunkt oberhalb von 200°C enthalten. Diese Öl-in-Wasser-Emulsionen sind ebenfalls mit Hilfe eines Emulgators stabilisiert.

Aus der EP-A-0 732 134 sind Entschäumer und/oder Entlüfter auf Basis von Öl-in-Wasser-Emulsionen für wässrige, zur Schaumbildung neigende Medien bekannt, wobei die Öl-Phase der Emulsionen
(a) mindestens einen Alkohol mit mindestens 12 C-Atomen, Destillationsrückstände, die bei der Herstellung von Alkoholen mit einer höheren Kohlenstoffzahl durch Oxosynthese oder nach dem Ziegler-Verfahren erhältlich sind, oder Mischungen der genannten Verbindungen und
(b) mindestens einen Ester aus einem Zuckeralkohol mit mindestens 4 OH-Gruppen oder mindestens 2 OH-Gruppen und mindestens einer intramolekularen Etherbindung und einer Fettsäure mindestens 20 C-Atomen im Molverhältnis 1 zu mindestens 1 enthält, wobei die freien OH-Gruppen dieser Ester gegebenenfalls mit C₁₂- bis C₁₈-Carbonsäuren ganz oder teilweise verestert sind.

Die hydrophobe Phase kann gegebenenfalls weitere entschäumend wirkende Verbindungen wie Fettsäureester aus Alkoholen mit mindestens 22 C-Atomen und C₁- bis C₃₆-Carbonsäuren, Polyethylenwachse, natürliche Wachse, Kohlenwasserstoffe mit einem Siedepunkt oberhalb von 200°C oder Fettsäuren mit 12 bis 22 C-Atomen enthalten.

Aus der US-A-4,950,420 sind Entschäumer für die Papierindustrie bekannt, die 10 bis 90 Gew.-% eines oberflächenaktiven Polyethers wie polyalkoxyliertes Glycerin oder polyalkoxylierten Sorbit, und 10 bis 90 Gew.-% eines Fettsäureesters von mehrwertigen Alkoholen wie Mono- oder Diester aus Fettsäuren und Polyxethylenglykol und/oder Polypropylenglykol enthalten, wobei die Entschäumer frei von irgendwelchen Ölen, Amiden, hydrophober Kieselsäure oder Silikonen sind.

Aus der WO-A-00/44470 sind Entschäumer und/oder Entlüfter auf der Basis von Öl-in-Wasser-Dispersionen bekannt, die in der hydrophoben Ölphase 3-Thiaalkan-1-ole, 3-Thiaoixid-alkan-1-ole, 3-Thiadioxid-alkan-1-ole, Ester der genannten Verbindungen oder deren Mischungen als entschäumend oder entlüftend wirksame Verbindungen enthalten.

Aus der WO-A-94/20680 sind wässrige, als Entschäumer einsetzbare Dispersionen bekannt, die Ethylenbis-stearamid oder andere aliphatische Diamide zusammen mit mindestens einer Verbindung aus der Gruppe der Mono- und Diester aus Polyethylenglykol und Fettsäuren, sulfonierten Mineralölen und Ethoxylierungsprodukten von Alkoholen mit 10 bis 14 C-Atomen.

Die meisten bekannten Entschäumersysteme haben den Nachteil, dass ihre Wirkung bei erhöhter Temperatur, beispielsweise oberhalb von 50°C, oft nicht ausreicht bzw. erhebliche Mengen eingesetzt werden müssen, um eine ausreichende Entgasung und/oder Entschäumung während des kontinuierlichen Herstellprozesses von Papier zu erzielen.

Der vorliegenden Erfindung liegt die Aufgabe zugrunde, Entschäumer und/oder Entlüfter für wässrige, zur Schaumbildung neigende Medien zur Verfügung zu stellen, wobei die Entschäumer bzw. Entlüfter insbesondere bei Temperaturen oberhalb von 50°C auch bei Dosierung in den sonst üblichen Mengen eine ausreichende Effizienz aufweisen sollen.

Die Aufgabe wird erfindungsgemäß gelöst mit Entschäumern und/oder Entlüftern auf Basis von Öl-in-Wasser-Dispersionen, deren Ölphase mindestens eine Verbindung aus der Gruppe der Alkohole mit mindestens 12 C-Atomen, alkoxylierte Fettalkohole, Mono-, Di- und Triglyceride von Fettsäuren, Fettsäureester aus Carbonsäuren mit mindestens 12 C-Atomen und ein- bis vierwertigen Alkoholen mit 1 bis 24 C-Atomen, Kohlenwasserstoffe mit einem Siedepunkt oberhalb von 200°C, Fettsäuren mit 12 bis 26 C-Atomen, 3-Thiaalkan-1-ole, 3-Thiaoxidalkan-1-ole, 3-Thiadioxid-alkan-1-ole und Ester der Thiaalkanverbindungen und deren wässrige Phase mindestens einen Stabilisator, Wasser und gegebenenfalls ein Verdickungsmittel enthält, wenn die Öl-in-Wasser-Dispersionen
(i) mindestens einen Polyglycerinester, der durch mindestens 20%ige Veresterung von Polyglycerin mit einer 12 bis 36 C-Atome aufweisenden Carbonsäure erhältlich ist,
   und
(ii) mindestens ein Bisamid aus Ethylendiamin und Carbonsäuren mit 10 bis 36 C-Atomen
enthalten.

Gegenstand der Erfindung ist außerdem die Verwendung von Mischungen aus
(i) mindestens einem Polyglycerinester, der durch mindestens 20%ige Veresterung von Polyglycerin mit einer 12 bis 36 C-Atome aufweisenden Carbonsäure erhältlich ist,
   und
(ii) mindestens einem Bisamid aus Ethylendiamin und Carbonsäuren mit 10 bis 36 C-Atomen
als Zusatz zu Entschäumern und/oder Entlüftern auf Basis von Öl-in-Wasser-Dispersionen sowie die Verwendung der Entschäumer und/oder Entlüfter zur Schaumbekämpfung von zur Schaumbildung neigenden wässrigen Medien, insbesondere zur Schaumbekämpfung bei der Zellstoffkochung, der Zellstoffwäsche, der Mahlung von Papierstoff, der Papierherstellung und der Dispergierung von Pigmenten für die Papierherstellung.

Geeignete Verbindungen, die die hydrophobe Phase der Öl-in-Wasser-Dispersionen bilden, sind aus der zum Stand der Technik angegebenen Literatur bekannt, vgl. DE-A-30 01 387, EP-A-0 531 713, EP-A-0 662 172, EP-A-0 732 134 und WO-A-00/44470. Als hydrophobe Phase können sämtliche Verbindungen verwendet werden, die als Entschäumer und/oder als Entlüfter bekannt sind, beispielsweise C₁₂- bis C₄₈-Alkohole wie Myristylalkohol, Cetylalkohol, Stearylalkohol, Palmitylalkohol, Talgfettalkohol und Behenylalkohol, sowie synthetisch hergestellte Alkohole, beispielsweise nach dem Ziegler-Verfahren durch Oxidation von Aluminiumalkylen erhältliche gesättigte, geradkettige, unverzweigte Alkohole. Synthetische Alkohole werden auch durch Oxosynthese erhalten. Hierbei handelt es sich in der Regel um Alkoholgemische. Die Alkohole können beispielsweise bis zu 48 C-Atome im Molekül enthalten. Sehr wirksame Entschäumer enthalten beispielsweise Mischungen aus mindestens einem C₁₂- bis C₂₆-Alkohol und mindestens einem Fettalkohol mit 28 bis 48 C-Atomen im Molekül, vgl. EP-A-0 322 830. Anstelle der reinen Alkohole können als entschäumend wirkende Verbindungen auch Destillationsrückstände eingesetzt werden, die bei der Herstellung von Alkoholen mit einer höheren Kohlenstoffzahl durch Oxosynthese oder nach dem Ziegler-Verfahren erhältlich sind. Weitere Verbindungen, die als Entschäumer und/oder Entlüfter in Betracht kommen, sind alkoxylierte Alkohole sowie alkoxylierte Destillationsrückstände, die bei der Herstellung von Alkoholen durch Oxosynthese oder nach dem Ziegler-Verfahren anfallen. Die alkoxylierten Verbindungen sind dadurch erhältlich, dass man die langkettigen Alkohole bzw. Destillationsrückstände mit Ethylenoxid oder mit Propylenoxid oder auch mit einer Mischung aus Ethylenoxid und Propylenoxid umsetzt. Hierbei kann man zunächst Ethylenoxid und anschließend Propylenoxid an die Alkohole oder die Destillationsrückstände anlagern oder man addiert zunächst Propylenoxid und danach Ethylenoxid. Pro OH-Gruppe des Alkohols lagert man meistens bis zu 5 mol Ethylenoxid bzw. Propylenoxid an. Besonders bevorzugt aus der Gruppe der alkoxylierten Verbindungen sind solche Reaktionsprodukte, die durch Addition von 1 oder 2 mol Ethylenoxid an 1 mol Fettalkohol bzw. Destillationsrückstand hergestellt werden.

Die obengenannten Fettalkohole mit mindestens 12 C-Atomen im Molekül werden meistens zusammen mit anderen ebenfalls als Entschäumer wirkenden Verbindungen eingesetzt. Solche Verbindungen sind beispielsweise Fettsäureester von C₁₂- bis C₂₆-Carbonsäuren, bevorzugt von C₁₂-C₂₂-Carbonsäuren, mit 1- bis 4-wertigen, vorzugsweise 1- bis 3-wertigen, C₁-C₂₄-Alkoholen, bevorzugt C₁-C₂₂-Alkoholen und besonders bevorzugt C₃-C₁₈-Alkoholen. Die Fettsäuren, die diesen Estern zugrundeliegen, sind beispielsweise Laurinsäure, Myristinsäure, Palmitinsäure, Stearinsäure, Arachinsäure, Behensäure, Lignocerinsäure und Cerotinsäure. Vorzugsweise verwendet man Palmitinsäure, Stearinsäure oder Behensäure. Man kann einwertige C₁- bis C₂₄-Alkohole zur Veresterung der genannten Carbonsäuren verwenden, z.B. Methanol, Ethanol, Propanol, Butanol, Hexanol, Dodecanol, Stearylalkohol und Behenylalkohol oder auch zweiwertige Alkohole einsetzen wie Ethylenglykol, 3-wertige Alkohole, z.B. Glycerin oder 4-wertige Alkohole wie beispielsweise Pentaerythrit. Vorzugsweise verwendet man 3-wertige Alkohole wie Glycerin. Die mehrwertigen Alkohole können vollständig oder auch nur teilweise verestert sein.

Weitere entschäumend und entlüftend wirkende Verbindungen sind Polyglycerinester. Solche Ester werden beispielsweise dadurch hergestellt, dass man Polyglycerine, die mindestens 2 Glycerin einheiten enthalten, mit mindestens einer C₁₂- bis C₃₆-Carbonsäure verestert. Die den Estern zugrundeliegenden Polyglycerine werden soweit verestert, dass Verbindungen entstehen, die in Wasser praktisch nicht mehr löslich sind. Die Polyglycerine erhält man beispielsweise durch alkalisch katalysierte Kondensation von Glycerin bei höheren Temperaturen oder durch Umsetzung von Epi chlorhydrin mit Glycerin in Gegenwart von sauren Katalysatoren. Die Polyglycerine enthalten üblicherweise mindestens 2 bis etwa 30, vorzugsweise 2 bis 12 Glycerin-Einheiten. Handelsübliche Polyglycerine enthalten Mischungen aus polymeren Glycerinen, z.B. Mischungen aus Diglycerin, Triglycerin, Tetraglycerin, Pentaglycerin und Hexaglycerin und gegebenenfalls höher kondensierten Polyglycerinen. Der Veresterungsgrad der OH-Gruppen der Polygly cerine beträgt mindestens 20 bis 100, vorzugsweise 60 bis 100 %. Die zur Veresterung verwendeten langkettigen Fettsäuren können gesättigt oder auch ethylenisch ungesättigt sein. Geeignete Fettsäuren sind beispielsweise Laurinsäure, Myristinsäure, Palmitinsäure, Stearinsäure, Arachinsäure, Behensäure, Ölsäure, Hexade censäuren, Elaidinsäure, Eicosensäuren, Docosensäuren wie Erucasäure oder mehrfach ungesättigte Säuren wie Octadecendiensäuren und Octadecentriensäuren, z.B. Linolsäure und Linolensäure sowie Mischungen der genannten Carbonsäuren. Als Entschäumer geeignete Ester von Polyglycerinen sind beispielsweise in der EP-A-0 662 172 beschrieben.

Andere als Entschäumer und/oder Entlüfter für wässrige, zur Schaumbildung neigende Medien geeignete Verbindungen, die entweder allein oder zusammen mit mindestens einem Alkohol mit mindestens 12 C-Atomen eingesetzt werden, sind Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molekül im Molver hältnis 1 zu mindestens 1, wobei die freien OH-Gruppen dieser Ester gegebenenfalls mit C₁₂- bis C₁₈-Carbonsäuren teilweise oder ganz verestert sind. Vorzugsweise verwendet man Ester aus Tetriten, Pentiten und/oder Hexiten mit mindestens 22 C-Atome aufweisenden Fettsäuren im Molverhältnis 1 zu mindestens 1,9. Besonders bevorzugt werden Ester aus Mannit und/oder Sorbit mit Behensäure im Molverhältnis von 1 zu mindestens 1, vorzugsweise 1 zu mindestens 1,9 eingesetzt. Außer den in Betracht kommenden Zuckeralkoholen Sorbit und Mannit eignen sich Adonit, Arabit, Xylit, Dulcit, Pentaerythrit, Sorbitan und Erythrit. Unter Zuckeralkoholen werden die aus Monosacchariden durch Reduktion der Carbonylfunktion entstehenden Polyhydroxyverbindungen ver standen, die selbst keine Zucker sind. Man kann auch die Anhydro-Verbindungen einsetzen, die aus Zuckeralkoholen durch intramolekulare Wasserabspaltung entstehen. Besonders wirksame Entschäumer und/oder Entlüfter erhält man wenn Zuckeralkohole mit C₂₂- bis C₃₀-Fettsäuren verestert werden. Sofern man die Zuckeralkohole nur teilweise mit einer mindestens 20 C-Atome enthaltenden Fettsäure verestert, kann man die nicht veresterten OH-Gruppen des Zuckeralkohols mit einer anderen Carbonsäure verestern, z.B. eine C₁₂- bis C₁₈-Carbonsäure einsetzen. Ester dieser Art werden in der EP A-0 732 134 beschrieben.

Die hydrophobe Phase der Entschäumer und/oder Entlüfter kann außerdem 1 bis 100 Gew.-% eines 3-Thiaalkan-1-ols, 3-Thiaoxidalkan-1-ols, 3-Thiadioxid-alkan-1-ols, eines Esters der genannten Verbindungen oder deren Mischungen enthalten. Sie enthält vorzugsweise 5 bis 75 Gew.-% eines 3-Thia-C₁₆- bis C₃₀-alkan-1-ols, 3-Thiaoxid-C₁₆- bis C₃₀-alkan-1-ols, 3-Thiadioxid-C₁₆-bis C₃₀-alkan-1-ols oder deren Mischungen. Besonders bevorzugt sind solche Entschäumer und/oder Entlüfter, deren hydrophobe Phase 5 bis 85 Gew.-% eines 3-Thia-C₁₈- bis C₂₈-alkan-1-ols enthält.

Weitere als Entschäumer und/oder Entlüfter geeignete Verbindungen sind Ketone mit Schmelzpunkten oberhalb von 45°C. Sie werden meistens zusammen mit Fettalkoholen eingesetzt, deren Schmelzpunkte bei Temperaturen oberhalb von 40°C liegen. Solche Entschäumermischungen sind aus der EP A-0 696 224 bekannt. Außerdem eignen sich die aus der DE-A 196 41 076 bekannten Umsetzungsprodukte von z.B. Mono- und/oder Diglyceriden mit Dicarbonsäuren sowie mit mindestens einer C₁₂- bis C₃₆-Fettsäure veresterten Umsetzungsprodukte von Glycerin mit Dicarbonsäuren als Zusatz zur hydrophoben Phase der erfindungsgemäßen Entschäumer und/oder Entlüfter.

Andere Verbindungen, die die Wirksamkeit von langkettigen Alkoholen als Entschäumer verstärken und daher auch in Entschäumermischungen eingesetzt werden, sind beispielsweise Polyethylenwachse mit einer Molmasse von mindestens 2000 sowie natürliche Wachse wie Bienenwachs oder Carnaubawachs.

Ein weiterer Bestandteil von Entschäumermischungen sind Kohlenwasserstoffe mit einem Siedepunkt oberhalb von 200°C (bestimmt bei Normaldruck). Bevorzugt eingesetzte Kohlenwasserstoffe sind Paraffinöle, z.B. die im Handel üblichen Paraffingemische, die auch als Weißöl bezeichnet werden. Außerdem kommen Paraffine in Betracht, deren Schmelzpunkt beispielsweise oberhalb von 50°C liegt.

Die Entschäumer und/oder Entlüfter enthalten erfindungsgemäß in der hydrophoben Phase Kombinationen von
(i) mindestens einem Polyglycerinester, der durch mindestens 20%ige Veresterung von Polyglycerin mit einer 12 bis 36 C-Atome aufweisenden Carbonsäure erhältlich ist,
   und
(ii) mindestens einem Bisamid aus Ethylendiamin und Carbonsäuren mit 10 bis 36 C-Atomen.

Der Anteil der Polyglycerinester in der hydrophoben Phase der Öl-in-Wasser-Dispersionen beträgt beispielsweise 0,5 bis 80, vorzugsweise 2 bis 20 Gew.-%. Das Gewichtsverhältnis von (i) Polyglycerinester zu (ii) Bisamiden beträgt beispielsweise 10 : 1 bis 1 : 10 und liegt bevorzugt in dem Bereich von 3 : 1 bis 1,5 : 1. Geeignete Polyglycerinester (i) wurden bereits oben genannt. Bisamide aus Ethylendiamin und Carbonsäuren mit 10 bis 36 C-Atomen werden beispielsweise in der WO-A-94/20680 beschrieben. Besonders bevorzugt eingesetzte Amide (ii) sind Ethylenbis-stearamid, Ethylenbisbehenamid und/oder Ethylenbislauramid. Die Ölphase der Öl-in-Wasser-Dispersionen enthält vorzugsweise mindestens einen Fettalkohol mit 12 bis 26 C-Atomen im Molekül, mindestens einen Glycerinester von Fettsäuren mit 12 bis 26 C-Atomen, bevorzugt 12 bis 22 C-Atomen und mindestens ein Mineralöl in Kombination mit (i) einem Polyglycerinester und mindestens einem Bisamid (ii).

Die hydrophobe Phase ist beispielsweise zu 5 bis 60 Gew.-%, vorzugsweise zu 10 bis 50 Gew.-% und insbesondere zu 10 bis 35 Gew.-% am Aufbau der Öl-in-Wasser-Dispersionen beteiligt. Der Anteil der wässrigen Phase am Aufbau der Dispersionen ergibt sich daraus jeweils durch Ergänzung auf 100 Gew.-%, z. B. beträgt er 95 bis 25 Gew.-%.

Die oben genannten als Entschäumer und/oder Entlüfter wirksamen Verbindungen werden entweder allein oder in Mischung untereinander in Kombination mit den Komponenten (i) und (ii) zur Herstellung der erfindungsgemäßen Entschäumer- und Entlüfterdispersionen eingesetzt. Sie können in jedem beliebigen Verhältnis miteinander gemischt werden. Das Mischen der Verbindungen und auch das Einemulgieren in Wasser erfolgt bei höheren Temperaturen. Die wirksamen Komponenten, die die Ölphase der Entschäumermischung bilden, werden beispielsweise auf Temperaturen oberhalb von 40°C, z.B. 70 bis 140°C erhitzt und unter Einwirkung von Scherkräften in Wasser emulgiert, so dass man Öl-in-Wasser-Emulsionen erhält. Hierfür verwendet man handelsübliche Vorrichtungen. Die mittlere Teilchengröße der dispergierten hydrophoben Phase beträgt bei spielsweise meistens 0,4 bis 40 µm, vorzugsweise 0,5 bis 10 µm.

Die so erhaltenen feinteiligen Öl-in-Wasser-Emulsionen werden stabilisiert, z.B. fügt man einen Stabilisator zu, beispielsweise Säuregruppen aufweisende, wasserlösliche, amphiphile Copolymerisate oder deren wasserlösliche Salze. Hierbei kann man beispielsweise so vorgehen, dass man zu der Öl-in-Wasser-Emulsion direkt nach dem Homogenisieren 0,01 bis 3 Gew. -%, bezogen auf die gesamte Emulsion, eines Säuregruppen aufweisenden, wasserlöslichen amphiphilen Copolymerisats oder eines wasserlöslichen Salzes davon zusetzt oder, dass man die als Entschäumer und/oder Entlüfter wirkenden Verbindungen in einer wässrigen Lösung eines Säuregruppen aufweisenden, wasserlöslichen, amphiphilen Copolymerisats oder eines Salzes davon emulgiert. Man erhält auf diese Weise nach dem Abkühlen auf Raumtemperatur lagerstabile Dispersionen.

Die erfindungsgemäßen Öl-in-Wasser-Dispersionen können gegebenenfalls feinteilige, praktisch wasserunlösliche, inerte Feststoffe mit Teilchengrößen <20 µm, vorzugsweise 0,1 bis 10 µm in einer Menge von beispielsweise 0,1 bis 50, vorzugsweise 1 bis 35 % des Gewichts der Ölphase der Öl-in-Wasser-Dispersionen enthalten. Geeignete inerte Feststoffe sind z.B. Kaolin, Kreide, Bentonit, Talkum, Bariumsulfat, Siliziumdioxid, Harnstoff-Formaldehyd-Pigmente, Melamin-Formaldehyd-Pigmente und mikrokristalline Cellulose. Die Verwendung solcher Feststoffe in Entschäumern ist aus der DE-A-36 01 929 bekannt.

Besonders vorteilhaft sind Entschäumerdispersionen, die als Stabilisator 0,01 bis 3 Gew.-% eines Säuregruppen aufweisenden, wasserlöslichen, amphiphilen Copolymerisats oder eines Salzes davon enthalten.

Weitere vorteilhafte Entschäumerdispersionen enthalten als Stabilisator 0,1 bis 3 Gew.-%, bezogen auf die Öl-in-Wasser-Dispersionen, mindestens eines
- Polymerisats von monoethylenisch ungesättigten Säuren mit Molmassen von 1500 bis 300 000,
- Pfropfpolymerisats von 5 bis 40 Gew.-Teilen N-Vinylformamid auf 100 Gew.-Teilen eines Polyalkylenglykols mit einer Molmasse von 500 bis 10 000,
- zwitterionischen Polyalkylenpolyamins,
- zwitterionischen Polyethylenimins,
- zwitterionischen Polyetherpolyamins oder
- zwitterionischen vernetzten Polyalkylenpolyamins.

Bevorzugt werden Entschäumer und/oder Entlüfter, die als Stabilisator Homopolymerisate der Acrylsäure, Homopolymerisate der Methacrylsäure, Copolymerisate aus Acrylsäure und Methacrylsäure, Copolymerisate aus Acrylsäure und Maleinsäure, Copolymerisate aus Methacrylsäure und Maleinsäure, Polyvinylsulfonsäure, Polyacryl amido-2-methylpropansulfonsäure oder deren Alkalimetall- und Ammoniumsalze mit Molmassen von 1 500 bis 300 000 enthalten.

Die erfindungsgemäßen Dispersionen können jedoch auch übliche nichtionische, anionische, amphotere und/oder kationische Emulgatoren als alleinige Stabilisatoren oder als Co-Emulgatoren enthalten. Sie werden beispielsweise in Mengen von 0,01 bis 3 Gew.-%, zur Stabilisierung von Öl-in-Wasser-Dispersionen eingesetzt. Hierbei handelt es sich z.B. um gebräuchliche grenzfläche naktive Stoffe, die mit den übrigen Stoffen der Entschäumerdispersion verträglich sind. Die als alleiniger Emulgator oder als Co-Emulgator mit einem anionischen amphiphilen Copolymerisat eingesetzten oberflächenaktiven Verbindungen können auch in Mischung untereinander verwendet werden. So kann man beispielsweise Mischungen aus anionischen und nichtionischen oberflächenaktiven Stoffen zur weiteren Stabilisierung der Entschäumerdispersionen verwenden. Die als Co-Emulgator in Betracht kommenden oberfläche naktiven Verbindungen sind in den zum Stand der Technik angegebenen Literaturstellen als Bestandteil von Entschäumerformulierun gen beschrieben. Solche Co-Emulgatoren sind beipielsweise Natri um- oder Ammoniumsalze höherer Fettsäuren, alkoxylierte Alkylphenole, oxethylierte ungesättigte Öle wie Reaktionsprodukte aus einem Mol Ricinusöl und 30 bis 40 Mol Ethylenoxid, sulfierte Ethoxylierungsprodukte von Nonylphenol oder Octylphenol sowie deren Natrium- oder Ammoniumsalze, Alkylarylsulfonate, Sulfonate von Naphthalin und Naphthalinkondensaten, Sulfosuccinate und Anlagerungsprodukte von Ethylenoxid und/oder Propylenoxid an Fettalkohole, mehrwertige Alkohole, Amine oder Carbonsäuren. Besonders wirksame Co-Emulgatoren sind sulfierte Alkyldiphenyl oxide, insbesondere bis-sulfierte Alkyldiphenyloxide wie bis-sulfiertes Dodecyldiphenyloxid.

Sofern die polymeren Stabilisatoren in Form der freien Säure nicht ausreichend wasserlöslich sind, werden sie in Form von wasserlöslichen Salzen eingesetzt, z.B. verwendet man die entsprechenden Alkalimetall-, Erdalkalimetall- und Ammoniumsalze. Diese Salze werden beispielsweise durch partielle oder vollständige Neutralisation der freien Säuregruppen der amphiphilen Copolymerisate mit Basen hergestellt, z.B. verwendet man zur Neutralisation Natronlauge, Kalilauge, Magnesiumoxid, Ammoniak oder Amine wie Triethanolamin, Ethanolamin, Morpholin, Triethylamin oder Butylamin. Vorzugsweise werden die Säuregruppen der amphiphilen Copolymerisate mit Ammoniak oder Natronlauge neutralisiert.

Die amphiphilen Copolymerisate enthalten Einheiten von
(a) hydrophoben monoethylenisch ungesättigten Monomeren und
(b) monoethylenisch ungesättigten Carbonsäuren, monoethylenisch ungesättigten Sulfonsäuren, monoethylenisch ungesättigten Phosphonsäuren oder deren Mischungen.

Geeignete hydrophobe monoethylenisch ungesättigte Monomere
(a) sind beispielsweise Styrol, Methylstyrol, Ethylstyrol, Acrylnitril, Methacrylnitril, C₂- bis C₁₈-Olefine, Ester aus monoethylenisch ungesättigten C₃- bis C₅-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.

Die amphiphilen Copolymerisate enthalten als hydrophile Monomere
(b) vorzugsweise Acrylsäure, Methacrylsäure, Maleinsäure, Maleinsäureanhydrid, Itaconsäure, Vinylsulfonsäure, 2-Acrylamidomethylpropansulfonsäure, Acrylamido-propan-3-sulfonsäure, 3-Sulfopropylacrylat, 3-Sulfopropylmethacrylat, Styrolsulfonsäure, Vinylphosphonsäure oder deren Mischungen in einpolymerisierter Form.

Die Molmasse der amphiphilen Copolymerisate beträgt beispielsweise 1000 bis 100 000 und liegt vorzugsweise in dem Bereich von 1500 bis 10 000. Die Säurezahlen der amphiphilen Copolymerisate betragen beispielsweise 50 bis 500, vorzugsweise 150 bis 350 mg KOH/g Polymer.

Besonders bevorzugt sind Stabilisatoren auf Basis von amphiphilen Copolymerisaten, wobei die Copolymerisate
(a) 95 bis 45 Gew.-% Isobuten, Diisobuten, Styrol oder deren Mischungen und
(b) 5 bis 55 Gew.-% Acrylsäure, Methacrylsäure, Maleinsäure, Halbester von Maleinsäure oder deren Mischungen einpolymerisiert enthalten. Besonders bevorzugt werden Copolymerisate eingesetzt, die
   (a) 45 bis 80 Gew.-% Styrol,
   (b) 55 bis 20 Gew.-% Acrylsäure und gegebenenfalls
   (c) zusätzlich weitere Monomere
einpolymerisiert enthalten. Die Copolymerisate können gegebenenfalls als weitere Monomere (c) Einheiten von Maleinsäurehalbestern einpolymerisiert enthalten. Solche Copolymerisate sind beispielsweise dadurch erhältlich, dass man Copolymerisate aus Styrol, Diisobuten oder Isobuten oder deren Mischungen mit Maleinsäureanhydrid in Abwesenheit von Wasser copolymerisiert und die Copolymerisate im Anschluß an die Polymerisation mit Alkoholen umsetzt, wobei man pro Mol Anhydridgruppen im Copolymerisat 5 bis 50 Mol-% eines einwertigen Alkohols einsetzt. Geeignete Alkohole sind beispielsweise Methanol, Ethano1, n-Propanol, Isopropanol, n-Butanol, Isobutanol und tert.-Butanol. Man kann jedoch auch die Anhydridgruppen der Copolymerisate mit mehrwertigen Alkoholen wie Glykol oder Glycerin umsetzen. Hierbei wird die Reaktion jedoch nur soweit geführt, dass nur eine OH-Gruppe des mehrwertigen Alkohols mit der Anhydridgruppe reagiert. Sofern die Anhydridgruppen der Copolymerisate nicht vollständig mit Alkoholen umgesetzt werden, erfolgt die Ringöffnung der nicht mit Alkoholen umgesetzten Anhydridgruppen durch Zugabe von Wasser.

Andere als Stabilisator einzusetzende Verbindungen sind beispielsweise handelsübliche Polymerisate von monoethylenisch ungesättigten Säuren sowie Pfropfpolymerisate von N-Vinylformamid auf Polyalkylenglykolen, die beispielsweise in der WO-A-96/34903 beschrieben werden. Die aufgepfropften Vinylformamideinheiten können gegebenenfalls bis zu 10 % hydrolysiert sein. Der Anteil an aufgepfropften Vinylformamideinheiten beträgt vorzugsweise 20 bis 40 Gew.-%, bezogen auf Polyalkylenglykol. Vorzugsweise ver wendet man Polyethylenglykole mit Molmassen von 2000 bis 10 000.

Die außerdem als Stabilisatoren in Betracht kommenden zwitterionischen Polyalkylenpolyamine und zwitterionischen Polyethyleni mine sind beispielsweise aus der EP-B-0112592 bekannt. Solche Verbindungen sind beispielsweise dadurch erhältlich, dass man ein Polyalkylenpolyamin oder Polyethylenimin zunächst alkoxyliert, z.B. mit Ethylenoxid, Propylenoxid und/oder Butylenoxid und die Alkoxylierungsprodukte anschließend quaternisiert, z.B. mit Me thylbromid oder Dimethylsulfat und die quaternierten, alkoxylierten Produkte dann mit Chlorsulfonsäure oder Schwefeltrioxid sulfatiert. Die Molmasse der zwitterionischen Polyalkylenpolyamine beträgt beispielsweise 1000 bis 9000 vorzugsweise 1500 bis 7500. Die zwitterionischen Polyethylenimine haben vorzugsweise Molmassen in dem Bereich von 2000 bis 1700 Dalton.

Die wässrige Phase kann gegebenenfalls ein Verdickungsmittel enthalten, z.B. hochmolekulare Polymere mit einer mittleren Molmasse Mw von mehr als 1 Million. Solche Verdickungsmittel für Öl-in-Wasser-Entschäumermischungen sind beispielsweise aus der EP-A-0 142 812 bekannt. Es handelt sich dabei beispielsweise um Polyacrylamide, Polyacrylsäuren oder Copolymerisate der Acrylsäure mit Acrylamid.

Die erfindungsgemäßen Entschäumer und/ oder Entlüfter sind in wässrigen Systemen, die zum Schäumen neigen, sowohl bei Raumtemperatur als auch bei höheren Temperaturen, z.B. bei Temperaturen oberhalb von 35°C, vorzugsweise > 52°C, sehr wirksam. Sie haben gegenüber bekannten Entschäumern eine wesentlich verbesserte Langzeitwirkung. Die Öl-in-Wasser-Dispersionen werden vorzugsweise als Entschäumer und/oder Entlüfter zur Schaumbekämpfung von zur Schaumbildung neigenden wässrigen Medien beispielsweise bei der Herstellung von Papier, in der Nahrungsmittelindustrie, der Stärkeindustrie und in Kläranlagen eingesetzt. Von besonderem Interesse ist jedoch die Verwendung der Entschäumer und/oder Entlüfter zur Schaumbekämpfung bei der Zellstoffkochung, Zellstoffwäsche, der Mahlung von Papierstoff, der Papierherstellung und der Dispergierung von Pigmenten für die Papierherstellung. Bei diesen Prozessen liegt die Temperatur des zu entschäumenden wässrigen Mediums meistens oberhalb von 50°C, z.B. in dem Temperaturbereich von 52 bis 75°C. Die erfindungsgemäßen Mischungen auf Basis von Öl-in-Wasser-Dispersionen wirken sowohl als Entschäumer auch als Entlüfter. In manchen Fällen ist die entlüftende Wirkung ausgeprägter als die entschäumende Wirkung. Sie können als Entschäumer oder Entlüfter verwendet werden. Sie werden auch mit Vorteil bei der Masse- und Oberflächenleimung von Papier eingesetzt. Beim Einsatz dieser Mischungen in Papierstoffsuspensionen steht beispielsweise ihre entlüftende Wirkung im Vordergrund. Be zogen auf 100 Gew.-Teile Papierstoff in einem schaumstoffbildenden Medium verwendet man beispielsweise bis zu 0,5, vorzugsweise 0,002 bis 0,3 Gew.-% der Entlüfter.

Die in den Beispielen angegebenen Teile sind Gew.-Teile. Die Prozentangaben beziehen sich auf das Gewicht, sofern nicht etwas anderes aus den Angaben in den Beispielen hervorgeht.

### Beispiele

Die entlüftende, entschäumende Wirkung wurde mit Hilfe eines Sonica-Meßgerätes bestimmt, wobei man zu einer 0,42 %igen Papierstoffsuspension bei 60°C genau soviel zugab, dass sich eine Konzentration von 5 ppm an Entschäumer, bezogen auf die Fettphase (Wirksubstanz) ergab. Man bestimmte den Luftgehalt kontinuierlich mittels Ultraschallabschwächung vor der Dosierung der Entschäumer und während der ersten 5 Minuten nach der Dosierung. Der Luftgehalt nahm zunächst ab und stieg gegen Ende der Messung wieder an. In den Tabellen ist jeweils der minimale Luftgehalt der Papierstoffsuspension in Vol.-% angegeben. Diese Meßmethode ist beschrieben in TAPPI Journal, Vo. 71, 65-69 (1988).

Die genannte Papierstoffsuspension wurde in allen Beispielen und Vergleichsbeispielen verwendet. Sie enthielt vor Zugabe eines Entlüfters 1,6 Vol.-% Luft. In der Tabelle ist unter der Rubrik minimaler Luftgehalt der Gehalt an Luft in Vol.-% nach Dosierung der Entlüfter angegeben. Je kleiner diese Zahl ist, um so wirksamer ist der Entlüfter.

Die Langzeitwirkung der Entschäumer bzw. Entlüfter wurde bestimmt, indem man den Luftgehalt der Papierstoffsuspension nach 5 Minuten mit dem minimalen Luftgehalt (unmittelbar nach der Dosierung des Entlüfters) verglich. Der in der Tabelle für die Langzeitwirkung angegebene Wert ist die Differenz aus dem Wert für die entlüftende Wirkung nach 5 Minuten und dem Wert, der unmittelbar nach der Dosierung gemessen wird. Je kleiner der Wert ist, desto besser ist die Langzeitwirkung.

Die angegebenen Teilchengrößen sind Mittelwerte, die mit Hilfe eines Coulter LS 230 Gerätes an ca. 0,01 %igen Dispersionen bestimmt wurden. Das Gerät arbeitet nach dem Prinzip der Fraunhofer-Beugung.

Die Viskositäten wurden in einem Brookfield-Rotationsviskosimeter (Digital Model RV TDV-II) bestimmt.

Zum Dispergieren verwendete man eine Fryma-Kolloidmühle, Typ MZ 50/A (Fryrna-Maschinenbau GmbH, D-79603 Rheinfelden).

### Beispiel 1

Die Ölphase bestand aus folgenden Komponenten:
19,4 Teilen eines Fettalkohlgemisches von C₁₂- bis C₂₆-Alkoholen
0,8 Teilen Ethylen-bis-steramid
5 Teilen eines Glycerinesters von C₁₂- bis C₂₂-Fettsäuren
1,0 Teilen Mineralöl (handelsübliches Weißöl) und
2,3 Teilen eines Polyglycerinesters aus einem Polyglyceringemisch aus
   30 % Diglycerin
   42 % Triglycerin
   17 % Teraglycerin und
   11 % höher kondensierte Polyglycerinen
und einem C₁₂- bis C₂₆-Fettsäuregemisch zu 75 % verestert wurde.

Die Wasserphase bestand aus
70 Teilen Wasser
3 Teilen eines 35 Gew.-%igen Emulgators der erhältlich ist durch Anlagerung von 25 Mol Ethylenoxid an 1 Mol Isooctylphenol und Verestern des Anlagerungsproduktes mit Schwefelsäure zum Halbester,
0,45 Teilen eines 31 %igen Wasser-in-Öl-Emulsion eines anionischen Polyacrylamids (Natriumsalz eines Copolymers aus 30 %
Acrylsäure und 70 % Acrylamid) und
0,3 Teilen 30 %iger wässriger Formaldehydlösung.

Die Komponenten der Ölphase wurden zunächst auf eine Temperatur von 125°C erhitzt und in die auf 90°C erwärmte Wasserphase unter Rühren und Dispergieren zugefügt. Die Emulsion wurde unter ständigem Rühren rasch auf 25°C abgekühlt. Die entstandene Dispersion hatte eine Viskosität von 560 mPas und eine mittlere Teilchengröße von 3,05 µm.

### Vergleichsbeispiel 1

Die Ölphase bestand aus folgenden Komponenten:
20,2 Teilen eines Fettalkohlgemisches von C₁₂- bis C₂₆-Alkoholen
5 Teilen eines Glycerinesters von C₁₂- bis C₂₂-Fettsäuren
1 Teilen Mineralöl (handelsübliches Weißöl) und
2,3 Teilen eines Polyglycerinesters aus einem Polyglyceringemisch aus
   30 % Diglycerin
   42 % Triglycerin
   17 % Teraglycerin und
   11 % höher kondensierte Polyglycerinen
und einem C₁₂- bis C₂₆-Fettsäuregemisch zu 75 % verestert wurde.

Die Wasserphase bestand aus
70 Teilen Wasser
3 Teilen eines 35 Gew.-%igen Emulgators der erhältlich ist durch Anlagerung von 25 Mol Ethylenoxid an 1 Mol Isooctylphenol und Verestern des Anlagerungsproduktes mit Schwefelsäure zum Halbester,
0,45 Teilen eines 31 %igen Wasser-in-Öl-Emulsion eines anionischen Polyacrylamids (Natriumsalz eines Copolymers aus 30 % Acrylsäure und 70 % Acrylamid) und
0,3 Teilen 30 %iger wässriger Formaldehydlösung.

Die Komponenten der Ölphase wurden zunächst auf eine Temperatur von 125°C erhitzt und in die auf 90°C erwärmte Wasserphase unter Rühren und Dispergieren zugefügt. Die Emulsion wurde unter ständigem Rühren rasch auf 25°C abgekühlt. Die entstandene Dispersion hatte eine Viskosität von 480 mPas und eine mittlere Teilchengröße von 3,15 µm.

### Beispiel 2

Die Ölphase aus
22,7 Teilen einer Mischung von 3-Thia-C₂₀-₂₈-alkan-1-olen, hergestellt nach dem Beispiel Thiaalkanol A der WO-A-00/44470, Seite 20,
2,5 Teilen eines Gycerinesters von C₁₂- bis C₂₂-Fettsäuren
0,9 Teilen Ethylenbisstearamid
2,3 Teilen eines Polyglycerinester der aus einem Polyglyceringemisches aus
30 % Diglycerin
42 % Triglycerin
17 % Teraglycerin und
11 % höher kondensierte Polyglycerinen und einem C₁₂- bis C₂₆-Fettsäuregemisch zu 75 % verestert wurden bei 125°C unter N₂-Atmosphäre aufgeschmolzen, wobei man eine homogene Schmelze erhielt. Diese wurde mit Hilfe eines Dispergators in einer 90°C heißen Lösung von
1,8 Teilen einer 42 Gew.-%igen wässrigen ammoniakalischen Lösung eines Polymers auf Basis von 50 Gew.-Teilen Styrol und 50 Gew.-Teilen Acrylsäure (erhältlich von der Fa. S.C. Johnson unter Bezeichnung Joncryl EEC 207),
0,45 Teilen einer 31 Gew.-igen Wasser-in-Ö1-Emulsion eines anionischen Polyacrylamids (Natriumsalz eines Copolymers aus 30 Gew.-% Acrylsäure und 70 Gew.-% Acrylamid)
0, 3 g 30%ige wässrige Formaldehydlösung und
0, 04 g 10%ige Schwefelsäure
70 g Wasser emulgiert. Man erhielt eine homogene Emulsion. Diese Emulsion wurde rasch auf Raumtemperatur abgekühlt, wobei man eine Dispersion (Aushärten der Öltröpfchen) erhielt. Die mittlere Teilchengröße betrug 2,85 µm, die Viskosität 370 mPas.

### Vergleichsbeispiel 2

23,5 Teilen einer Mischung von 3-Thia-C₂₀₋₂₈-alkan-1-olen, hergestellt gemäß Beispiel Thiaalkanol A der WO-A-00/44470, Seite 20
2,5 Teilen eines Gycerinesters von C₁₂- bis C₂₂-Fettsäuren
2,3 Teilen eines Polyglycerinester der aus einem Polyglyceringemisches aus
30 % Diglycerin
42 % Triglycerin
17 % Teraglycerin und
11 % höher kondensierte Polyglycerinen und einem C₁₂- bis C₂₆-Fettsäuregemisch zu 75 % verestert wurden bei 125°C unter N₂-Atmosphäre aufgeschmolzen, wobei man eine homogene Schmelze erhielt. Diese wurde mit Hilfe eines Dispergators in einer 90°C heißen Lösung von
1,7 Teilen einer 42 Gew.-%igen wässrigen ammoniakalischen Lösung eines Polymers auf Basis von 50 Gew.-Teilen Styrol und 50 Gew.-Teilen Acrylsäure (erhältlich von der Fa. S.C. Johnson unter Bezeichnung Joncryl EEC 207),
0,45 Teilen einer 31 %igen Wasser-in-Öl-Emulsion eines anionischen Polyacrylamids (Natriumsalz eines Copolymers aus 30 % Acrylsäure und 70 % Acrylamid)
0,04 g 10%ige Schwefelsäure
0,3 g 30% ige wässrige Formaldehydlösung und
70 g Wasser emulgiert. Man erhielt eine homogene Emulsion. Diese Emulsion wurde rasch auf Raumtemperatur abgekühlt, wobei man eine Dispersion (Aushärten der Öltröpfchen) erhielt. Die mittlere Teilchengröße betrug 2,7 µm, die Viskosität 330 mPas.

### Beispiel 3

Die Ölphase bestand aus folgenden Komponenten:
17,0 Teilen eines Fettalkohlgemisches von C₁₂- bis C₂₆-Alkoholen 2 Teilen natives Öl auf Basis eines Glycerinesters von C₁₂- bis C₂₂-Fettsäuren
1,3 Teilen Ethylenbisstearamid
0,5 Teilen Bienenwachs
4 Teilen Paraffin Smp 60/62°C
1,8 Teilen eines Polyglycerinesters aus einem Polyglyceringemisch aus
   30 % Diglycerin
   42 % Triglycerin
   17 % Teraglycerin und
   11 % höher kondensierte Polyglycerinen
   und einem C₁₂- bis C₂₆-Fettsäuregemisch zu 75 % verestert wurde.

Die Wasserphase bestand aus
70 Teilen Wasser
2 Teilen 45 %iges Dodecylbenzolsulfonat Na.-Salz
2,1 Gew.-% China Clay surry (70 %ig) mit einer mittleren Partikelgröße von 1,5 µm
0,3 Teilen einer 31 %igen Wasser-in-Öl-Emulsion eines anionischen Polyacrylamids (Natriumsalz eines Copolymers aus 30 % Acrylsäure und 70 % Acrylamid) und
0,3 Teilen 30 %iger wässriger Formaldehydlösung.

Die Komponenten der Ölphase wurden zunächst auf eine Temperatur von 125°C erhitzt und in die 90°C warme Wasserphase unter Rühren und Dispergieren zugefügt. Die Emulsion wurde unter ständigem Rühren rasch auf 25°C abgekühlt. Die entstandene Dispersion hatte eine Viskosität von 780 mPas und eine mittlere Teilchengröße von 3,5 µm.

### Vergleichsbeispiel 3

Die Ölphase bes tand aus folgenden Komponenten:
18,3 Teile eines Fettalkohlgemisches von C₁₂- bis C₂₆-Alkoholen
2 Teile natives Öl Basis Glycerinesters von C₁₂- bis C₂₂-Fettsäuren
0,5 Teile Bienenwachs
4 Teilen Paraffin Smp 60/62°C und
1,8 Teilen eines Polyglycerinesters aus einem Polyglyceringemisch aus
30 % Diglycerin
   42 % Triglycerin
   17 % Teraglycerin und
   11 % höher kondensierte Polyglycerinen
und einem C₁₂- bis C₂₆-Fettsäuregemisch zu 75 % verestert wurde.

Die Wasserphase bestand aus
70 Teilen Wasser
2 Teilen 45 %iges Dodecylbenzolsulfonat Na.-Salz
2,1 Gew.-% China Clay surry (70 %ig) mit einer mittleren Partikelgröße von 1,5 µm
0,3 Teile einer 31 %igen Wasser-in-Öl-Emulsion eines anionischen Polyacrylamids (Natriumsalz eines Copolymers aus 30.% Acrylsäure und 70 % Acrylamid) und
0,3 Teilen 30 %iger wässriger Formaldehydlösung.

Die Komponenten der Ölphase wurden zunächst auf eine Temperatur von 125°C erhitzt und in die 90°C warme Wasserphase unter Rühren und Dispergieren zugefügt. Die Emulsion wurde unter ständigem Rühren rasch auf 25°C abgekühlt. Die entstandene Dispersion hatte eine Viskosität von 820 mPas und eine mittlere Teilchengröße von 3,6 µm.

### Vergleichsbeispiel 4

Die Ölphase bestand aus folgenden Komponenten:
20,7 Teilen eines Fettalkohlgemisches von C₁₂- bis C₂₆-Alkoholen 2 Teilen natives Öl Basis Glycerinesters von C₁₂- bis C₂₂-Fettsäuren
1,3 Teile Ethylen-bis-stearamid
0,5 Teile Bienenwachs
4 Teilen Paraffin Smp 60/62°C und
die Wasserphase bestand aus
70 Teilen Wasser
2 Teilen 45 %iges Dodecylbenzolsulfonat Na.-Salz
0,3 Teile eines 31 %igen Wasser-in-Öl-Emulsion eines anionischen Polyacrylamids (Natriumsalz eines Copolymers aus 30 % Acrylsäure und 70 % Acrylamid) und
0,3 Teilen 30 %iger wässriger Formaldehydlösung.

Die Komponenten der Ölphase wurden zunächst auf eine Temperatur von 125°C erhitzt und in die 90°C warme Wasserphase unter Rühren und Dispergieren zugefügt. Die Emulsion wurde unter ständigem Rühren rasch auf 25°C abgekühlt. Die entstandene Dispersion hatte eine Viskosität von 910 mPas und eine mittlere Teilchengröße von 3,6 µm.

Die nach den Beispielen und Vergleichsbeispielen hergestellten Öl-in-Wasser-Dispersionen wurden nach den oben beschriebenen Methoden auf ihre entschäumende bzw. entlüftende Wirkung bei Einsatzmengen von 5 bzw. 3 ppm, bezogen auf trockenen Papierstoff, geprüft. Die Ergebnisse sind in der Tabelle angegeben.

**Tabelle**

| Beispiel | Vergleichsbeispiel | Luftgehalt in Vol.-% bei Einsatz von | | | |
|---|---|---|---|---|---|
| | | 5 PPm Entlüfter, bezogen auf Trockenmasse | | 3 ppm Entlüfter, bezogen auf Trockenmasse | |
| | | tiefster Wert | Durchschnitt über 5 min | tiefster Wert | Durchschnitt über 5 min |
| 1 | - | 0,40 | 0,68 | 0,83 | 1,02 |
| - | 1 | 0,85 | 1,1 | 1,01 | 1,22 |
| 2 | - | 0,38 | 0,75 | 0,98 | 1,20 |
| - | 2 | 0,82 | 1,03 | 1,03 | 1,18 |
| 3 | - | 0,42 | 0,72 | 0,80 | 1,05 |
| - | 3 | 0,88 | 1,12 | 0,98 | 1,21 |
| - | 4 | 1,01 | 1,23 | 1,10 | 1,22 |

Wie die Meßergebnisse belegen, ergibt die Kombination von Polyglycerinester mit Ethylenbisstearamid gegenüber der Verwendung der Einzelkomponenten eine verbesserte Wirkung.

## Patentansprüche

1. Entschäumer und/oder Entlüfter auf Basis von Öl-in-Wasser-Dispersionen, deren Ölphase mindestens eine hydrophobe Verbindung und deren wässrige Phase mindestens einen Stabilisator, Wasser und gegebenenfalls ein Verdickungsmittel enthält, **dadurch gekennzeichnet, dass** die Öl-in-Wasser-Dispersionen Kombinationen von
(i) mindestens einem Polyglycerinester, der durch mindestens 20%ige Veresterung von Polyglycerin mit einer 12 bis 36 C-Atome aufweisenden Carbonsäure erhältlich ist, und
(ii)mindestens einem Bisamid aus Ethylendiamin und Carbonsäuren mit 10 bis 36 C-Atomen
enthalten.

2. Entschäumer und/oder Entlüfter nach Anspruch 1, **dadurch gekennzeichnet, dass** die hydrophobe Verbindung ausgewählt ist aus der Gruppe der Alkohole mit mindestens 12 C-Atomen, alkoxylierten Fettalkohole, Mono-, Di- und Triglyceride von Fettsäuren, Fettsäureester aus Carbonsäuren mit mindestens 12 C-Atomen und ein- bis vierwertigen Alkoholen mit 1 bis 24 C-Atomen, Kohlenwasserstoffe mit einem Siedepunkt oberhalb von 200°C, Fettsäuren mit 12 bis 26 C-Atomen, 3-Thiaalkan-1-ole, 3-Thiaoxidalkan-1-ole, 3-Thiadioxid-alkan-ole und Ester der Thiaalkanverbindungen.

3. Entschäumer und/oder Entlüfter nach Anspruch 1, **dadurch gekennzeichnet, dass** die hydrophobe Verbindung ausgewählt ist aus der Gruppe der Alkohole mit mindestens 12 C-Atomen, alkoxylierten Fettalkohole, Mono-, Di- und Triglyceride von Fettsäuren, Fettsäureester aus Carbonsäuren mit mindestens 12 C-Atomen und ein- bis dreiwertigen Alkoholen mit 3 bis 22 C-Atomen, Kohlenwasserstoffe mit einem Siedepunkt oberhalb von 200°C, Fettsäuren mit 12 bis 22 C-Atomen, 3-Thiaalkan-1-ole, 3-Thiaoxidalkan-1-ole, 3-Thiadioxid-alkan-ole und Ester der Thiaalkanverbindungen.

4. Entschäumer und/oder Entlüfter nach einem der Ansprüche 1 bis 3, **dadurch gekennzeichnet, dass** das Gewichtsverhältnis von (i) Polyglycerinester zu (ii) Bisamiden 10 : 1 bis 1 : 10 beträgt.

5. Entschäumer und/oder Entlüfter nach einem der Ansprüche 1 bis 3, **dadurch gekennzeichnet, dass** das Gewichtsverhältnis von (i) Polyglycerinester zu (ii) Bisamiden 3 : 1 bis 1,5 : 1 beträgt.

6. Entschäumer und/oder Entlüfter nach einem der Ansprüche 1 bis 5, **dadurch gekennzeichnet, dass** die Ölphase mindestens einen Fettalkohol mit 12 bis 26 C-Atomen im Molekül, mindestens einen Glycerinester von Fettsäuren mit 12 bis 26 C-Atomen und mindestens ein Mineralöl enthält.

7. Entschäumer und/oder Entlüfter nach einem der Ansprüche 1 bis 6, **dadurch gekennzeichnet, dass** der Anteil der hydrophoben Phase der Ölphase am Aufbau der Öl-in-Wasser-Dispersion 5 bis 60 Gew.-% und der Anteil der wässrigen Phase 95 bis 40 Gew.-% beträgt.

8. Entschäumer und/oder Entlüfter nach einem der Ansprüche 1 bis 7, **dadurch gekennzeichnet, dass** die Öl-in-Wasser-Dispersionen 0,1 bis 50 Gew.-% mindestens eines Polyglycerinesters enthalten.

9. Entschäumer und/oder Entlüfter nach einem der Ansprüche 1 bis 8, **dadurch gekennzeichnet, dass** sie als Bisamid (ii) Ethylen-bis-stearamid enthalten.

10. Verwendung von Mischungen aus
(i) mindestens einem Polyglycerinester, der durch mindestens 20%ige Veresterung von Polyglycerin mit einer 12 bis 36 C-Atome aufweisenden Carbonsäure erhältlich ist, und
(ii) mindestens einem Bisamid aus Ethylendiamin und Carbonsäuren mit 10 bis 36 C-Atomen
als Zusatz zu Entschäumern und/oder Entlüftern auf Basis von Öl-in-Wasser-Dispersionen.

11. Verwendung der Entschäumer und/oder Entlüfter nach einem der Ansprüche 1 bis 9 zur Schaumbekämpfung von zur Schaumbildung neigenden wässrigen Medien, insbesondere zur Schaumbekämpfung bei der Zellstoffkochung, der Zellstoffwäsche, der Mahlung von Papierstoff, der Papierherstellung und der Dispergierung von Pigmenten für die Papierherstellung.

## Claims

1. An antifoam and/or deaerator based on an oil-in-water dispersion whose oil phase comprises at least one hydrophobic compound and whose aqueous phase comprises at least one stabilizer, water and, if appropriate, a thickener, wherein the oil-in-water dispersion comprises a combination of
(i) at least one polyglyceryl ester which is obtainable by at least 20% esterification of polyglycerol with a carboxylic acid of 12 to 36 carbon atoms
and
(ii)at least one bisamide of ethylenediamine and carboxylic acids of 10 to 36 carbon atoms.

2. The antifoam and/or deaerator according to claim 1, wherein the hydrophobic compound is selected from the group consisting of the alcohols of at least 12 carbon atoms, alkoxylated fatty alcohols, mono-, di- and triglycerides of fatty acids, fatty acid esters of carboxylic acids of at least 12 carbon atoms and monohydric to tetrahydric alcohols of 1 to 24 carbon atoms, hydrocarbons having a boiling point above 200°C, fatty acids of 12 to 26 carbon atoms, 3-thiaalkan-1-ols, 3-thiaoxoalkan-1-ols, 3-thiadioxoalkanols and esters of the thiaalkane compounds.

3. The antifoam and/or deaerator according to claim 1, wherein the hydrophobic compound is selected from the group consisting of the alcohols of at least 12 carbon atoms, alkoxylated fatty alcohols, mono-, di- and triglycerides of fatty acids, fatty acid esters of carboxylic acids of at least 12 carbon atoms and monohydric to trihydric alcohols of 3 to 22 carbon atoms, hydrocarbons having a boiling point above 200°C, fatty acids of 12 to 22 carbon atoms, 3-thiaalkan-1-ols, 3-thiaoxoalkan-1-ols, 3-thiadioxoalkanols and esters of the thiaalkane compounds.

4. The antifoam and/or deaerator according to any of claims 1 to 3, wherein the weight ratio of (i) polyglyceryl esters to (ii) bisamides is from 10 : 1 to 1 : 10.

5. The antifoam and/or deaerator according to any of claims 1 to 3, wherein the weight ratio (i) polyglyceryl esters to (ii) bisamides is from 3 : 1 to 1.5 : 1.

6. The antifoam and/or deaerator according to any of claims 1 to 5, wherein the oil phase comprises at least one fatty alcohol having 12 to 26 carbon atoms in the molecule, at least one glyceryl ester of fatty acids of 12 to 26 carbon atoms and at least one mineral oil.

7. The antifoam and/or deaerator according to any of claims 1 to 6, wherein the amount of the hydrophobic phase of the oil phase in the composition of the oil-in-water dispersion is from 5 to 60% by weight and the amount of the aqueous phase is from 95 to 40% by weight.

8. The antifoam and/or deaerator according to any of claims 1 to 7, wherein the oil-in-water dispersion comprises from 0.1 to 50% by weight of at least one polyglyceryl ester.

9. The antifoam and/or deaerator according to any of claims 1 to 8, which comprises ethylenebisstearamide as bisamide (ii).

10. The use of a mixture of
(i) at least one polyglyceryl ester which is obtainable by at least 20% esterification of polyglycerol with a carboxylic acid of 12 to 36 carbon atoms
and
(ii)at least one bisamide of ethylenediamine and carboxylic acids of 10 to 36 carbon atoms
as an additive for antifoams and/or deaerators based on oil-in-water dispersions.

11. The use of an antifoam and/or deaerator according to any of claims 1 to 9 for foam control of aqueous media which tend to form foam, in particular for foam control in pulp cooking, pulp washing, the beating of paper stock, papermaking and the dispersing of pigments for papermaking.

## Revendications

1. Agents antimoussants et/ou désaérants à base de dispersions huile dans l'eau, dont la phase huileuse contient au moins un composé hydrophobe et dont la phase aqueuse contient au moins un stabilisateur, de l'eau et éventuellement un agent épaississant, **caractérisés en ce que** les dispersions huile dans l'eau contiennent des combinaisons constituées des corps suivants :
(i) au moins un ester de polyglycérol, que l'on peut obtenir par estérification à 20 % au moins de polyglycérol avec un acide carboxylique présentant 12 à 36 atomes de carbone, et
(ii) au moins un bisamide d'éthylènediamine et d'acides carboxyliques ayant 10 à 36 atomes de carbone.

2. Agents antimoussants et/ou désaérants selon la revendication 1, **caractérisés en ce que** le composé hydrophobe est choisi dans le groupe constitué des alcools ayant au moins 12 atomes de carbone, des alcools gras alcoxylés, des mono-, di- et triglycérides d'acides gras, des esters d'acides gras composés d'acides carboxyliques ayant au moins 12 atomes de carbone et des alcools mono- à quadrivalents ayant 1 à 24 atomes de carbone, des hydrocarbures ayant un point d'ébullition supérieur à 200°C, des acides gras ayant 12 à 26 atomes de carbone, des 3-thiaalcan-1-ols, des 3-thiaoxyde-alcan-1-ols, des 3-thiadioxyde-alcanols et des esters des composés de thiaalcane.

3. Agents antimoussants et/ou désaérants selon la revendication 1, **caractérisés en ce que** le composé hydrophobe est choisi dans le groupe constitué des alcools ayant au moins 12 atomes de carbone, des alcools gras alcoxylés, des mono-, di- et triglycérides d'acides gras, des esters d'acides gras composés d'acides carboxyliques ayant au moins 12 atomes de carbone et des alcools mono- à trivalents ayant 3 à 22 atomes de carbone, des hydrocarbures ayant un point d'ébullition supérieur à 200 °C, des acides gras ayant 12 à 22 atomes de carbone, des 3-thiaalcan-1-ols, des 3-thiaoxyde-alcan-1-ols, des 3-thiadioxyde-alcanols et des esters des composés de thiaalcane.

4. Agents antimoussants et/ou désaérants selon l'une quelconque des revendications 1 à 3, **caractérisés en ce que** le rapport pondéral de (i) l'ester de polyglycérol aux (ii) bisamides représente 10:1 à 1:10.

5. Agents antimoussants et/ou désaérants selon l'une quelconque des revendications 1 à 3, **caractérisés en ce que** le rapport pondéral de (i) l'ester de polyglycérol aux (ii) bisamides représente 3:1 à 1,5:1.

6. Agents antimoussants et/ou désaérants selon l'une quelconque des revendications 1 à 5, **caractérisés en ce que** la phase huileuse contient au moins un alcool gras ayant 12 à 26 atomes de carbone dans la molécule, au moins un ester de glycérol d'acides gras ayant 12 à 26 atomes de carbone et au moins une huile minérale.

7. Agents antimoussants et/ou désaérants selon l'une quelconque des revendications 1 à 6, **caractérisés en ce que** la fraction de la phase hydrophobe de la phase huileuse dans la constitution de la dispersion huile dans l'eau représente 5 à 60 % en poids et la fraction de la phase aqueuse 95 à 40 % en poids.

8. Agents antimoussants et/ou désaérants selon l'une quelconque des revendications 1 à 7, **caractérisés en ce que** les dispersions huile dans l'eau contiennent 0,1 à 50 % en poids d'au moins un ester de polyglycérol.

9. Agents antimoussants et/ou désaérants selon l'une quelconque des revendications 1 à 8, **caractérisés en ce qu'**ils contiennent comme bisamide (ii) du bis-stéaramide d'éthylène.

10. Utilisation de mélanges constitués des corps suivants :
(i) au moins un ester de polyglycérol que l'on peut obtenir par estérification au moins à 20 % de polyglycérol avec un acide carboxylique présentant 12 à 36 atomes de carbone, et
(ii) au moins un bisamide d'éthylènediamine et d'acides carboxyliques ayant 10 à 36 atomes de carbone
en plus des agents antimoussants et/ou désaérants à base de dispersions huile dans l'eau.

11. Utilisation des agents antimoussants et/ou désaérants selon l'une quelconque des revendications 1 à 9 pour lutter contre la mousse de milieux aqueux ayant tendance à mousser, en particulier pour lutter contre la mousse lors de la cuisson de pâte de cellulose, du lavage de pâte de cellulose, du broyage de pâte à papier, de la fabrication de papier et de la dispersion de pigments pour la fabrication de papier.
